# EUROPEAN PATENT SPECIFICATION

(11) **EP 1 757 066 B1**
(45) Date of publication and mention of the grant of the patent: **21.11.2007**
(21) Application number: 05757968.2
(22) Date of filing: 08.06.2005
(51) Int. Cl.: H04L 29/06, H04N 7/24

(54) **METHOD AND SYSTEM FOR INTERACTIVE CONTROL OF MEDIA OVER A NETWORK**
VERFAHREN UND SYSTEM ZUR INTERAKTIVEN STEUERUNG VON MEDIEN ÜBER EIN NETZWERK
PROCEDE ET SYSTEME PERMETTANT UN CONTROLE INTERACTIF DES SUPPORTS SUR UN RESEAU

(30) Priority: 17.06.2004 US 871759
(43) Date of publication of application: 28.02.2007
(73) Proprietor: Hewlett-Packard Development Company, L.P., Houston, TX 77070 (US)
(72) Inventor: COVELL, Michele, Hewlett Packard Company, Palo Alto, CA 94304 (US); ROY, Sumit, Hewlett Packard Company, Palo Alto, CA 94304 (US); APOSTOLOPOULOS, John, G., Hewlett Packard Company, Palo Alto, CA 94304 (US)
(74) Representative: Schoppe, Fritz
(86) International application number: PCT/US2005/020350
(87) International publication number: WO 2006/007352

(56) References cited:
- WO-A-98/34405
- US-A1- 2001 041 062

## Description

### TECHNICAL FIELD

Embodiments of the present invention are related to the field of communication networks.

### BACKGROUND ART

Computer networks are frequently used to deliver media (e.g., audio and/or video) to users. Frequently, the users want to skip through irrelevant or unimportant portions of the media and quickly access what they feel is important. Other times, the users want to review a portion of the media which is interesting or important to them.

As an example, using the keypad of a telephone, the users can cue forward to a desired portion of a message or review a portion of the message that was previously accessed. The media is typically sent from a locally situated server which is communicatively coupled with a user's electronic device. In one prior art implementation, time scale modification (TSM) software on the user's electronic device is used to cue to a desired portion of the message. TSM software allows lengthening or compressing the time scale of an audio signal without altering its frequency character. In other words, the audio can be played back at a faster or slower rate than real time and still be clearly understood. Another example is a personal video recorder (PVR) which allows users to digitally record television content and play it back later. The PVR systems include the typical fast forward/reverse controls found on digital versatile disk (DVD) players and video cassette recorders (VCRs). Typically, the software application for controlling the media is disposed upon the user's electronic device. As a result, response to user input is perceived, by the user, as being immediate or nearly so.

However, while these systems perform well when implemented locally, providing a similar level of performance when the media control software is implemented upon a remote computer (e.g., in a network) has been problematic. For example, due to the delay inherent in networked communications, immediate response to a user's input is difficult to achieve. As a result, the user's perceived control over the playback of the media is reduced. Thus, if a user wants to review a previously played portion of an audio message, the user "presses" the rewind button on their controller and the media control software on the remote computer responds to the user's input to rewind the audio message. However, due to the delay inherent in the network, there is a lag between the time the user generates the command and when the remote computer actually acts upon the command. As a result, the user may overshoot the desired portion of the media and then must either input additional cueing commands to reach the desired portion, or wait until the desired portion is reached.

For example, a user is watching a movie via a streaming data connection with a remotely located server and wants to rewind the movie to see a favorite scene again. The user presses the rewind button and expects the movie to rewind immediately or shortly thereafter. However, due to the latency in the communications between the user's computer and the remotely located server, the service delay in the remotely located server fulfilling the user's command, and the latency in delivering the media to the user's computer, there is a substantial pause (e.g., 5 seconds) in fulfilling the user's command. As a result, the user keeps pressing the rewind button in anticipation of seeing the movie begin to rewind. When the user reaches the desired portion of the movie, they release the rewind button. Again, the delay between when the user releases the button and when the results of that action are delivered to the user result in the user rewinding past, or "overshooting," the desired portion of the movie by 5 seconds. The user can either play the movie at normal speed until the desired portion of the movie is reached, or press the fast forward of their media controller in the hope of resuming play at the desired portion. However, the user may overshoot the desired portion again as problem of communication latency still exists. Thus, the user either can try to anticipate the communication delay in anticipation of the above mentioned delays or settle for a reduced amount of control over the media.

Thus, systems for interactive control of media via a network suffer from a perceived lack of immediacy to users of the system. As a result, precise control over the media is difficult to realize.

Also, patent document US2001/041062 (5-November-2001) discloses a set-top device with a storage. As video content is being streamed by a central server and displayed to the user, the set-top stores continuously a portion of the video content in a rolling fashion. The user can request VCR-like commands to the set-top, but only for the portion of the video content currently stored in the set-top. No VCR-like commands can be sent to the central server.

### DISCLOSURE OF THE INVENTION

In one embodiment of the present invention, disclosed by the method of independent claim 1, a request is generated from a first device to a remotely located second device for a modified media stream. A period of delay is then determined between when the request is generated and when the modified media stream is desired. The modified media stream is then created on the first device during the period of delay such that the modified media stream is available during the period of delay. Other detailed embodiments of the invention are set out in the dependent claims.

### BRIEF DESCRIPTION OF THE DRAWINGS

The accompanying drawings, which are incorporated in and form a part of this specification, illustrate embodiments of the present invention and, together with the description, serve to explain the principles of the invention. Unless specifically noted, the drawings referred to in this description should be understood as not being drawn to scale.

FIGURE 1 is a diagram of a network utilized in accordance with embodiments of the present invention.

FIGURE 2 is a block diagram showing components of a system for interactive control of media via a computer network in accordance with embodiments of the present invention.

FIGURE 3 shows how data packets are typically processed in a streaming media environment.

FIGURE 4 shows the processing of data packets in accordance with embodiments of the present invention.

FIGURE 5 is a block diagram showing components of a system for interactive control of media via a computer network in accordance with embodiments of the present invention.

FIGURE 6 is a block diagram showing components of a system for interactive control of media via a computer network in accordance with embodiments of the present invention.

FIGURE 7 is a block diagram showing components of a system for interactive control of media via a computer network in accordance with embodiments of the present invention.

FIGURE 8 is a flowchart of a method for interactive control of media via a computer network in accordance with embodiments of the present invention.

FIGURE 9 is a flowchart of a method for interactive control of media via a computer network in accordance with embodiments of the present invention.

FIGURE 10 is a block diagram of an exemplary computer system utilized in embodiments of the present invention.

### MODES FOR CARRYING OUT THE INVENTION

Reference will now be made in detail to embodiments of the present invention, examples of which are illustrated in the accompanying drawings. While the present invention will be described in conjunction with the following embodiments, it will be understood that they are not intended to limit the present invention to these embodiments alone. On the contrary, the present invention is intended to cover alternatives, modifications, and equivalents which may be included within the spirit and scope of the present invention as defined by the appended claims. Furthermore, in the following detailed description of the present invention, numerous specific details are set forth in order to provide a thorough understanding of the present invention. However, embodiments of the present invention may be practiced without these specific details. In other instances, well-known methods, procedures, components, and circuits have not been described in detail so as not to unnecessarily obscure aspects of the present invention.

### PHYSICAL STRUCTURE OF EMBODIMENTS IN ACCORDANCE WITH THE PRESENT INVENTION

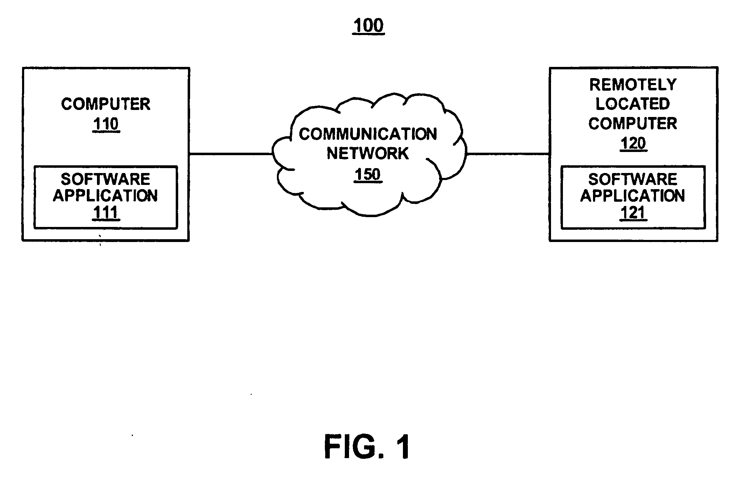

Figure 1 is a diagram of a network 100 utilized in accordance with embodiments of the present invention. The following discussion will begin with a description of the physical structure of the present invention. This discussion will then be followed with a description of the operation of the present invention. With respect to the physical structure of the present invention, portions of the present invention are comprised of computer-readable and computer-executable instructions (e.g., software application 111) that reside in computer 110. In embodiments of the present invention, computer 110 may comprise a handheld electronic device such as a cellular telephone or personal digital assistant (PDA), a personal computer, a laptop computer, an embedded computer, a set-top box, or the like for presenting media. Furthermore, a user can control the presentation of media from remotely located computer 120 using computer 110.

Portions of the present invention may also comprise computer-readable and computer-executable instructions (e.g., software application 121) that reside in remotely located computer 120. Remotely located computer 120 is for sending media (e.g., audio content, video content, or audio/video content) to computer 110 via communication network 150. In embodiments of the present invention, computer network 150 may comprise an Ethernet network, an infrared (IR) communication network, a Bluetooth wireless communication network, a cellular telephone network, a radio network, a broadband connection, a satellite link, the Internet, or the like.

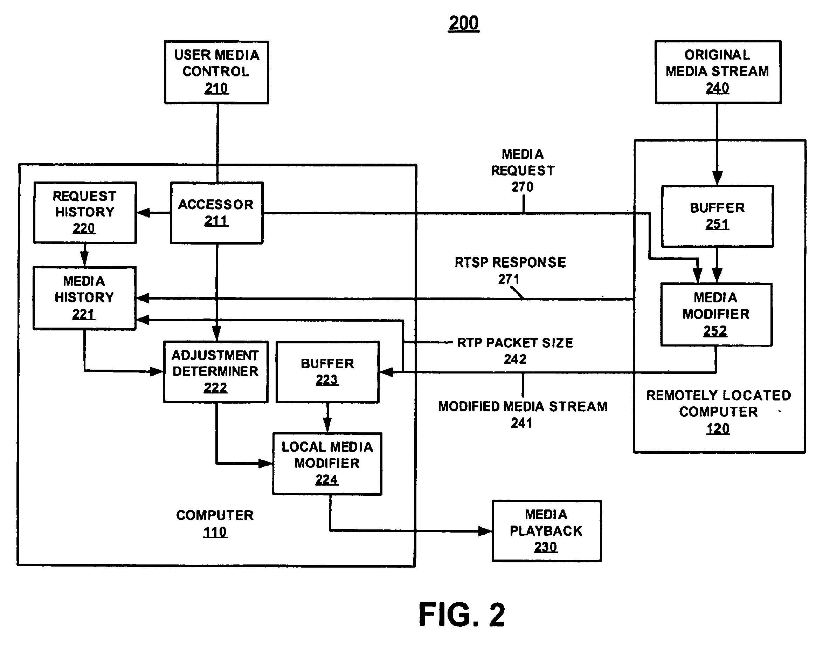

Figure 2 is a block diagram showing components of a system 200 for interactive control of media via a computer network in accordance with embodiments of the present invention. It is appreciated that for clarity, communication network 150 of Figure 1 is represented in Figure 2 by the communication pathways of media request 270, RTSP response 271, and modified media stream 241. In Figure 2, user media control 210 is an interface for allowing a user to control the presentation of media which is received via communication network 150. In embodiments of the present invention, user media control 210 may comprise a component of computer 110 or may be a device communicatively coupled with computer 110. User media control 210 is coupled with accessor 211. Accessor 211 is coupled with request history 220, adjustment determiner 222, and with media modifier 252 of remotely located computer 120. Request history 220 is also coupled with adjustment determiner 222 via media history 221. Adjustment determiner 222 is coupled with a local media modifier 224 which is in turn coupled with media playback 230. Media playback 230 may comprise a component of computer 110 or may be a device communicatively coupled with computer 110. Computer 110 further comprises a buffer 223 coupled with local media modifier 224.

### OPERATION OF EMBODIMENTS IN ACCORDANCE WITH THE PRESENT INVENTION

The following discussion sets forth in detail the operation of embodiments of the present invention. As shown in Figure 2, original media stream 240 is input to a buffer 251 of remotely located computer 120. The output of buffer 251 is coupled with media modifier 252 of remotely located computer 120 which outputs a compressed media stream 241 to buffer 223 of computer 110. Media modifier 252 is also for modifying the original media stream 240 to create modified media stream 241. Modified media stream 241 then comprises the input to buffer 223 of computer 110.

In embodiments of the present invention, user media control 210 is utilized to generate requests for a modification of the media received from remotely located computer 120. In embodiments of the present invention, the request is accessed by accessor 211 and is then conveyed to media modifier 252 via media request 270. In embodiments of the present invention, the request is also sent by accessor 211 to request history 220, adjustment determiner 222, and media modifier 252 of computer 120. In embodiments of the present invention, this media request 270 may be formatted as a real-time streaming protocol (RTSP) request. Media modifier 252 modifies original media steam 240 in accordance with media request 270 and sends the modified media stream 241 to buffer 223.

For example, when media from remotely located computer 120 comprises audio content, user media control 210 can be used to generate a request to increase/decrease the playback rate of the audio content, or to enable/disable noise reduction filtering, etc. A RTSP rate update message (e.g., media request 270) is sent to remotely located computer 120 comprising a playback command and a scalar which designates a rate for streaming the data from remotely located computer 120 to computer 110. While the present invention recites a RTSP message specifically, embodiments of the present invention are well suited to use other formats for media request 270. Media modifier 252 will then modify original media stream 240 to increase/decrease the rate of the audio content, to enable/disable noise reduction filtering, etc., in accordance with the request from computer 110.

When media from remotely located computer 120 comprises video content, user media control 210 can be used to generate a request to increase/decrease the playback rate of the video content, to control a camera which is recording a live event (e.g., controlling the orientation or zoom level of the camera), to track a pre-designated person or object in a meeting, etc. Media modifier 252 will then modify original media stream 240 to increase/decrease the playback rate of the video content, to stream video content wherein the zoom level of the camera or the coordinates upon which the view are centered are changed, or to track a pre-designated person or object in a meeting in accordance with the request from computer 110. Alternatively, media modifier 252 may be a pre-fetchor which retrieves additional data in response to user commands. For example, if a user media control 210 is controlling the scrolling of a camera and the user command is to scroll the view to the left, media request 270 may be a pre-fetch command for additional data in anticipation that the user will continue scrolling. While the present embodiment recites these modifications to a media stream specifically, embodiments of the present invention are not limited to these modifications alone.

This embodiment is also important for browsing of large images, where only a portion of the image is stored locally, because, for example, of limited local storage or limited bandwidth for downloading the image, or privacy or commercial reasons. An example of a commercial application is where the end-user is granted access to portions of the image that they pay for, so as the end-user browses the large image he agrees to pay for each new portion before that portion is delivered or before it is delivered with maximum quality. Another related commercial issue is that the end-user may not need to pay for the image data itself, but may need to pay for the network resources for downloading the image data, once again leading to a preference for only downloading user-selected portions of data (as opposed to downloading all of the image data). Example images include satellite images, maps, medical images, electronic versions of printed material such as newspapers or books, as well as other images which contain a large amount of date.

In conventional systems in which the modification of the original media stream is performed locally, there is little or no discernable latency by the user between when a request for a modified media steam is generated and when the modified media stream is displayed. However, in a system implemented via computer network wherein the server is remotely located, a greater amount of latency is exhibited between when the user generates a request for a modified media steam is generated and when the modified media stream is displayed. This is due, in part, to the delay in conveying the request from computer 110 to remotely located computer 120 as well as the delay in conveying the modified media stream from remotely located computer 120 to computer 110. An additional delay may be realized in the amount of time it actually takes remotely located computer 120 to service the request for a modification to the media stream. Finally, a delay may be incurred as data packets currently in buffer 223 will be presented to the user without the requested modification.

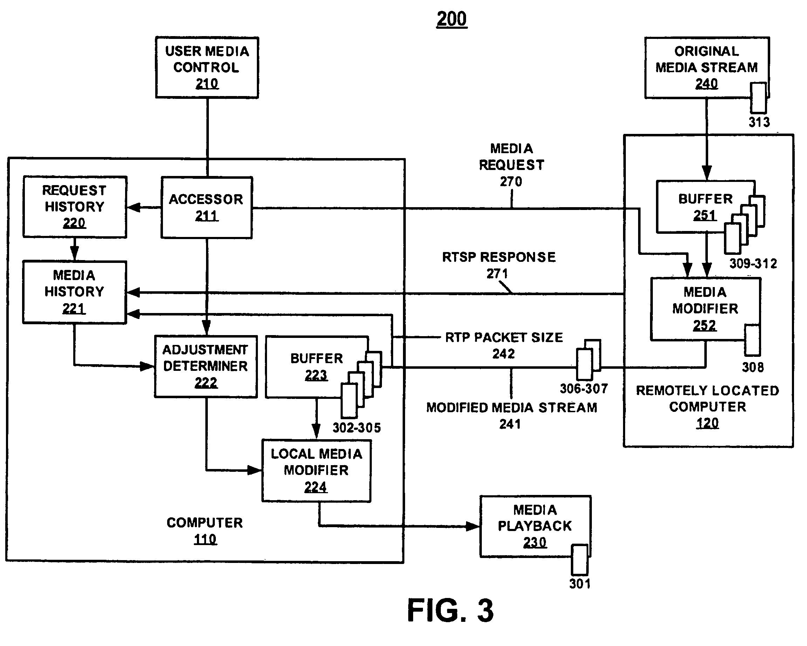

As a result, software application 111 has no knowledge of what part of original media stream 240 is being serviced at the time media request 270 is generated. This is shown in Figure 3 which shows how data packets are typically processed in a streaming media environment. In embodiments of the present invention, the media sent from remotely located computer 120 comprises streaming media content. Typically, original media stream 240 is modified by remotely located computer 120 which then sends a stream of compressed data packets to computer 110. As shown in Figure 3, while the user is accessing data packet 301 via media playback 230, buffer 223 is holding data packets 302-305. Additionally, data packets 306 and 307 are in transit via communication network 150. While media modifier 252 of remotely located computer 120 is currently processing data packet 308, data packets 309-312 are held in buffer 251 awaiting processing. Data packets 309-312 as well as data packet 313 represent unprocessed data packets of original media stream 240.

As shown in Figure 3, while a user may decide to generate a request for modifying the media stream based upon the data packet (e.g., data packet 301) that the user is accessing, the first data packet which can be processed by media modifier 252 in accordance with the requested media modification is data packet 309. As a result, there is a delay (e.g., data packets 302-308) between when the request is generated and when the modification of the media stream is finally delivered to the user. This can be inconvenient to users and result in a diminished perception of control over the media stream. In embodiments of the present invention, modification of these data packets (e.g., data packets 302-308) is performed locally by computer 110 until the modified media stream (e.g., data packets 308-313) is received from remotely located computer 120.

In order to correctly modify the incoming media stream, embodiments of the present invention determine an adjustment which, when applied to the incoming media stream, will create the modified media stream requested by computer 110. Additionally, embodiments of the present invention determine a time period for applying the adjustment to the incoming media stream which approximates the delay period between when the request for the modified media stream is generated and when the modified media stream is delivered or likely to be delivered to computer 110. In so doing, embodiments of the present invention locally modify the media stream to approximate the requested modified media stream until the modified media stream can be delivered via the network.

In embodiments of the present invention, when the request for the modified media stream is sent to remotely located computer 120, information about the request is also sent to request history 220 and to adjustment determiner 222. In embodiments of the present invention, request history 220 comprises a buffer which stores information describing the requested modification of the media stream and a timestamp of when the request for modification of that modification was made. For example, if a user is receiving audio content at a rate of 1X, the request for a modified media stream may comprise a request to decrease the playback rate of the media stream to a rate of 0.5X. Request history 220 records a request for a playback rate of 0.5X and appends a timestamp to the request. By storing a history of the requests in request history 220, embodiments of the present invention can determine the playback rate characteristics of data packets in buffer 223 for a given time period.

In embodiments of the present invention, media history 221 is used to determine the period of delay between when a request for a modified media stream is generated and when the modified media stream is delivered or expected to be delivered. In embodiments of the present invention, media history 221 modifies the timestamp of the rate request from request history 220 to account for the communications delay incurred via network 150 (e.g., media request 270 and RTSP response 271), the time it takes for remotely located computer 120 to service the request, and the local buffer delay. In so doing, embodiments of the present invention can determine the period of delay between when a request for a modified media stream is generated and when the modified media stream is delivered or expected to be received. In embodiments of the present invention, media history 221 further comprises the information describing the requested modification of the media stream from request history 220. Using the above example, media history 221 would include the playback rate of data packets currently in buffer 223 (1X) as well as the requested playback rate (0.5X). This facilitates comparing the playback rate requested in media request 270 with the playback rate of data packets currently in buffer 223. In so doing, embodiments of the present invention can determine a local adjustment that is applied to data packets currently in buffer 223 in order to create modified media stream locally (e.g., on computer 110). This local adjustment is applied to arriving data packets as well until the first data packet of modified media stream 241 arrives at local media modifier 224.

There are a variety of methods for determining when a response to a request for a modification to a media stream is delivered or expected to be delivered in accordance with embodiments of the present invention. In the embodiment of Figure 2, media history 221 records when the request is generated and when a response acknowledging the request is received. For example, when computer 110 generates a RTSP request to remotely located computer 120 for a modified media stream, remotely located computer 120 generates a RTSP response to the request. Embodiments of the present invention calculate the difference between when media request 270 is sent from computer 110 and when a reply (e.g., RTSP response 271) to that message is received by computer 110. In so doing, embodiments of the present invention can calculate the delay between when a request for a modified media stream is generated and when the modified media stream is delivered, or expected to arrive at computer 110.

Additionally, in RTSP response 270 remotely located computer 120 can provide service delay information which notifies computer 110 of the period of delay between the receipt of media request 270 and when that request will be acted upon. In embodiments of the present invention, remotely located computer 120 may also send timestamp information in RTSP response 271 which tells computer 110 the timestamp of the first data packet of modified data stream 241 (e.g., the timestamp of data packet 309 of Figure 3), or may designate a place in the media stream (e.g., data packet 309 of Figure 3) which is the first data packet of the modified media stream.

Embodiments of the present invention also determine a media adjustment, also referred to as the "Δ value," and the duration of the media adjustment that is applied locally (e.g., by computer 110) to data packets prior to the arrival of the requested modified media stream 241. In embodiments of the present invention, adjustment determiner 222 determines the duration of the locally applied media adjustment by accessing media history 221. As described above, when media request 270 is generated, adjustment determiner 222 accesses the media request. Adjustment determiner 222 also accesses media history 221 to determine when modified media stream 241 is delivered or expected to be received. Adjustment determiner 223 compares these values to determine the period of delay between when the request is generated and when modified media stream (e.g., modified media stream 241) is delivered or expected to be received. Adjustment determiner 222 also determines the Δ value of the locally applied media adjustment by accessing media history 221. As described above, media history 221 comprises a record of the characteristics of the requested modified media stream 241 as well as the characteristics of the data packets already in, for example, buffer 223. For example, using the above example, adjustment determiner compares the playback rate of data packets currently in buffer 223 (1X) with the requested playback rate (0.5X) to determine the Δ value that will be applied to data packets in buffer 223 and in transit via communication network 150. By comparing these values, adjustment determiner 222 can determine the Δ value of the locally applied adjustment to the media stream.

In embodiments of the present invention, information about the Δ value and duration of the locally applied media adjustment is then sent to local media modifier 224. Local media modifier 224 receives the data packets from buffer 223 and adjusts or modifies these data packets such that they are in accordance with requested parameters of modified media stream 241. In other words, adjustment determiner 222 provides the Δ value which is then applied to the data packets received from buffer 223 by local media modifier 224. In so doing, the present invention creates locally, modified media stream 241 from the prior media stream. Additionally, the duration of the locally applied media modification is sent to local media modifier 224 from adjustment determiner 222. Thus, the present invention applies a local adjustment or modification to data packets from buffer 223 such that the requested modified media stream is created locally. Additionally, the locally adjustment is applied for a time period long enough to allow data packets modified in accordance to media request 270 to be conveyed from media modifier 252 to local media modifier 224. In embodiments of the present invention, when it is determined that modified media stream 241 has been received at, for example, local media modifier 224, the Δ value is no longer applied to the data packets. As a result, modified media stream 241 is now presented to the user.

The following discussion will refer to Figures 2 and 3 to explain the system for interactive control of media via a computer network in accordance with embodiments of the present invention. Referring to Figure 2, a user is receiving audio media (e.g., a phone message) from remotely located computer 120. Initially, the audio media is being received in "real time" or at a speed of 1X the data rate of original media stream 240. The user decides to slow down the data rate in anticipation of a phone number in the phone message. The user generates media request 270 with user media control 210 to slow the data rate to 0.5 X real time. Accessor 211 accesses media request 270 and forwards the request to media modifier 252 (e.g., a time scale modification module), request history 220, and adjustment determiner 222. In response to media request 270, remotely located computer 120 generates RTSP response 271 and includes the timestamp information of the first data packet of modified media stream 241 (e.g., data packet 309 of Figure 3). Remotely located computer 120 finishes processing data packet 308 which comprises the last data packet of the original media stream that will be sent to computer 110.

Request history 220 appends a timestamp to media request 270 and forwards this information (e.g., the request to slow the data rate from 1 X to 0.5 X and the appended timestamp) to media history 221. Media history 221 modifies the timestamp information appended to the request to account for the communications delay incurred via network 150 (e.g., the time between media request 270 is generated and RTSP response 271 is received), the timestamp of data packet 309, and the local buffer delay. Adjustment determiner 222 accesses media history 221 to determine the Δ value that will be applied to the original media stream until data packet 309 is conveyed to local media modifier 224.

In the present embodiment, adjustment determiner compares the current data rate (e.g., 1X) with the requested data rate (e.g., 0.5X) and determines that the data rate of data packets 302-308 should be slowed by a factor of 2 (e.g., 1X/ 0.5X). Adjustment determiner 222 also determines how long this Δ value will be applied by local media modifier 224. In the present embodiment, by accessing media history 221, adjustment determiner 222 identifies data packet 309 (e.g., by the timestamp appended by remotely located computer 120) as the first data packet of modified media stream 240. Adjustment determiner 222 then passes this information to local media modifier 224. In response, local media modifier 224 applies the Δ value to data packets 302-308, thereby creating modified media stream 241 locally on computer 110. In other words, local media modifier 224 adjusts the playback rate of data packets 302-308 to correspond to the difference between the user's current setting (e.g., media request 270) and the setting that it believes media modifier 252 gave at the buffer time of the data packet currently being played. When data packet 309 arrives at local media modifier 224, the Δ value is no longer applied to incoming data packets as the rate adjustment has already been applied at remotely located computer 120.

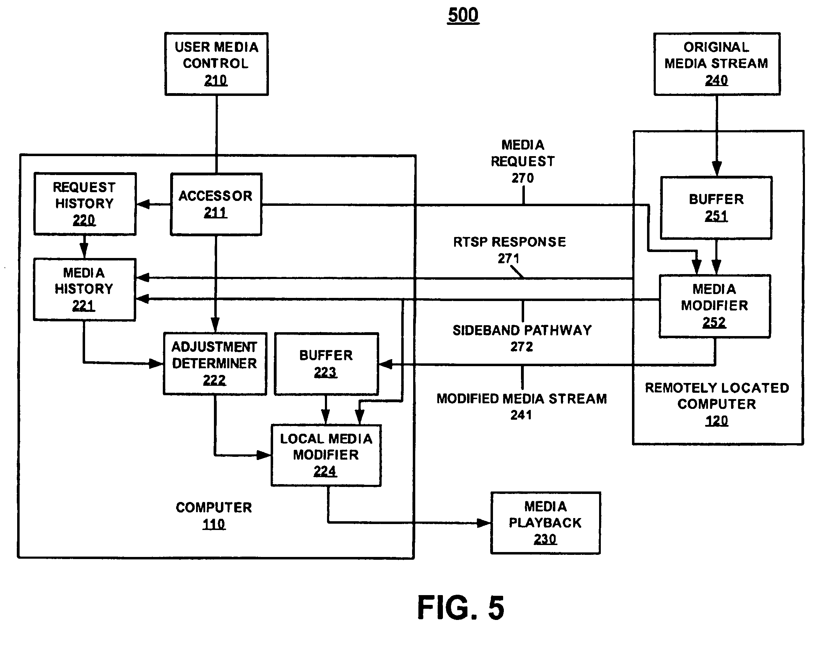

In another embodiment, a mechanism may be included in system 200 which facilitates detecting and/or verifying when the first data packet of the modified media stream has been conveyed to computer 110. For example, information in the header of the data packets may indicate to local media modifier 224 that the data packet currently being accessed by local media modifier 224 has already been modified by media modifier 252 and, therefore, does not require further processing. In another embodiment, an out of band signal (e.g., sideband pathway 272 of Figure 5) may convey this information to computer 110.

In embodiments of the present invention, local media modifier 224 may align the last full pitch period of the last data packet (e.g., data packet 308) which is modified locally with the first full pitch period of the first data packet (e.g., data packet 309) of modified media stream 241. This can reduce discontinuities which occur when transitioning from the data packets processed by local media modifier 224 to the data packets of modified media stream 241 which have been modified by media modifier 252. For example, in a streaming audio application, the pitch periods of data packets 308 and 309 may not match the pitch period of data packet 309 because, for example, they were processed using different processing algorithms. As a result, a user may be able to detect a jump or gap in the audio signal. However, by aligning the pitch periods of the data packets, this effect can be minimized

In embodiments of the present invention, different processing algorithms may be used by media modifier 252 and local media modifier 224. For example, local media modifier 224 may utilize a lower quality (e.g., less computationally expensive) algorithm that approximates the processing performed by media modifier 252. This may be desirable in situations in which computer 110 is a less capable system and not able to adequately support a complex or more computationally expensive processing algorithm. Additionally, media modifier 252 may be utilizing a proprietary high-quality algorithm which is only available remotely while local media modifier 224 utilizes a simpler processing algorithm which is more widely available.

Using a lower quality processing algorithm in local media modifier 224 may result in noticeably diminished quality to the user of computer 110 while modifications to the media stream are being performed by local media modifier 224. However, this may be minimally perceptible to the user as it takes the user a short amount of time to adjust to a change, thus masking the initial low quality. However, the user will be able to perceive quick system response to requests for modifying the media stream, even if the initial media quality is lower for a short amount of time.

Embodiments of the present invention are advantageous because they facilitate conveying the media via a network while still giving the sense of immediacy to user commands for controlling the media. As a result, the user has a greater sense of control over the presentation of the media while controlling the media interactively. Previously, this level of control was typically found on computers which performed all of the media modification locally. However, because some types of media modification are computationally intensive, a user's computer, or other electronic device, may not be well suited to performing this function. Therefore, it is advantageous to perform this function remotely (e.g., at remotely located computer 120) and send the modified media to the user's computer. An additional benefit of embodiments of the present invention is that bandwidth utilization may be reduced by removing extraneous data before sending it to the user's computer over a network. Additionally, because the local adjustment to the original media stream is only performed until the modified media stream can be conveyed from remotely located computer 120, a less capable (e.g., less computationally intensive) media modifier can be used on the user's computer.

In the above example, while media request 270 may request a modification of original media stream 240 to provide a 0.5 X data rate, this may not be possible. For example, in time scale modification, changing the data rate is typically dependent upon adding/removing a full pitch period from the original media stream. As a result, while a data rate of 0.5 X may be requested, the closest achievable data rate may actually be 0.6 X. However, sending this information to computer 110 may require more bandwidth than is desired or available. In one embodiment of the present invention, this information is conveyed to media history 221 via the data path of RTP packet information 242.

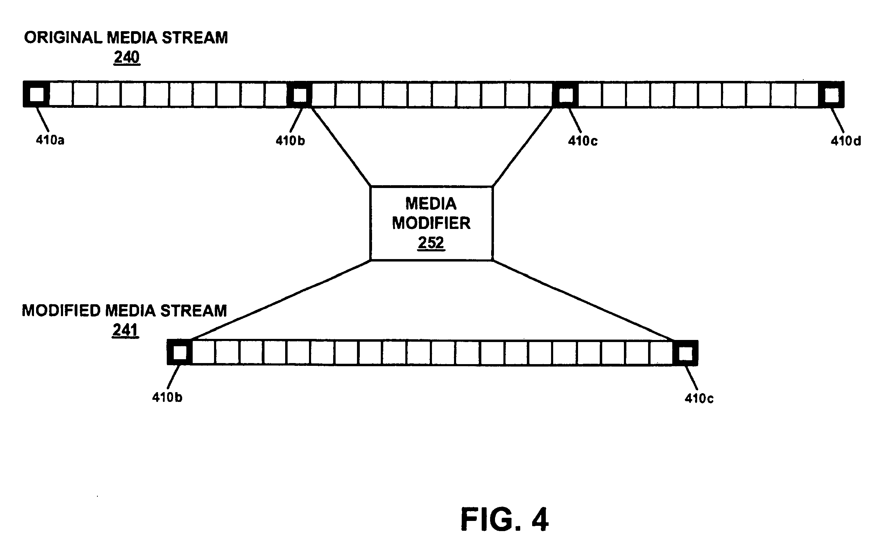

Figure 4 shows the processing of data packets in accordance with embodiments of the present invention. In Figure 4, each of the boxes of original media stream 240 and modified media stream 241 represents a frame of data (e.g., an audio frame, a video frame, or an audio/video frame). In Figure 4 original media stream 240 is indexed by markers 410a, 410b, and 410c. As an example, each of the index markers is inserted into original media stream 240 denotes 100 milli-second (100ms) intervals of original media stream 240. In another embodiment, each of the index markers can be used to denote the beginning or end of some other interval such as a pitch period of an audio stream. In embodiments of the present invention, each data packet output by media modifier 252 comprises a portion of original media stream 240 that is between two of these index markers. Thus, each of the data packets output by media modifier 252 (e.g., data packets 301-313 of Figure 3) therefore comprises 100ms of data from original media stream 240. However, in embodiments of the present invention, the size of the data packets output from media modifier 252 are altered to indicate actual playback rate variations. In other words, in embodiments of the present invention, media modifier 252 varies the size of the output data packets to indicate actual playback rate variations. In Figure 4, original media stream 240 is indexed at 100ms intervals. However, because the user requested a playback rate of 0.5X, media modifier 252 outputs the same data into a data packet having a playback period of 200ms.

As shown in Figure 4, modified media stream 241 comprises data packets in which the data from original media stream 240 are now sent in data packets having a playback period of 200ms. In embodiments of the present invention, information about the playback period of each data packet output by media modifier 252 is included in the RTP header of the respective data packet. In Figure 2, this information is conveyed to media history 221 via RTP packet size 242. As a result, embodiments of the present invention provide input timing information to computer 110 in that each data packet received by computer 110 represents fixed size packets of data from original media stream 240. This is advantageous in situations in which, for example, audio data is modified by media modifier 252 of remotely located computer 120 while video data is modified by local media modifier 224 of computer 110. In these situations, drift can occur between the two signals such that over time they are no longer synchronized. As a result, for example, a person's lips may be moving but no sound is made or vice versa. By providing input timing information, embodiments of the present invention facilitate coordinating playback of audio/video media. Additionally, local playback rate information is provided to computer 110 due to the variable size of the data packets output by media modifier 252.

### SIDEBAND PATHWAY INTERACTIVE SYSTEM EMBODIMENT

Figure 5 is a block diagram showing components of a system 500 for interactive control of media via a computer network in accordance with embodiments of the present invention. In the embodiment of Figure 5, system 500 is similar to that described above with reference to system 200 of Figure 2 with the further addition of a sideband pathway 272, also referred to as an "out of band signal," coupling media modifier 252, local media modifier 224, and media history 221. It is appreciated that sideband pathway 272 may be conveyed via communication network 150 of Figure 1 in embodiments of the present invention. In embodiments of the present invention, when communications are established between computer 110 and remotely located computer 120, sideband pathway 272 is also established.

In embodiments of the present invention, sideband pathway 272 is a real time protocol (RTP) pathway which allows media modifier 252 to send information about modified media stream 241 to computer 110. For example, when media modifier 252 is performing TSM processing of an audio stream, it can send rate information via sideband pathway 272 to media history 221 and local media modifier 224. Thus, information about actual playback rate variations can be sent via sideband pathway 272 rather than relying upon variably sized data packets described above with reference to Figures 3 and 4. For example, media modifier 252 can send rate information to media history 221 and local media modifier 224 which conveys that the actual data rate for a given data packet is 0.4 X. While using sideband pathway 272 requires more bits, it has the advantage of not relying upon quantized data.

Additionally, media modifier 252 can send information about the media modification which relieves local media modifier 224 from performing some of its calculations. For example, media modifier can send information which conveys the scaling rate used for each data packet of modified media stream 241 as well as alternative overlaps that could be used by local media modifier 224 to adjust the rate of the media stream locally. There is no additional computational cost to remotely located computer 120 in doing this because media modifier 252 computes alternative offsets when it computes peak-location information from original media stream 240. Advantageously, local media modifier 224 does not have to be as capable (e.g., computationally intensive) a component. This is advantageous for devices such as handheld computers and PDAs which may not have sufficient computation power to perform complex media modification calculations in a timely manner.

In another embodiment, media modifier 252 can send information via sideband pathway 272 which allows computer 110 to locally restore information that was dropped by remotely located computer 120. For example, when increasing the data rate, remotely located computer 120 may drop some data which computer 110 would want to restore when media request 270 is for a decrease in the data rate. Sometimes when speeding an audio signal, the appearance of pitch is destroyed (e.g., the voicing of a fricative near a vowel). Because media modifier 252 has access to original media stream 240, it can send information about data that was dropped from original media stream 240 which allows local media modifier 224 to restore that data.

### FUTURE DATED INTERACTIVE SYSTEM EMBODIMENT

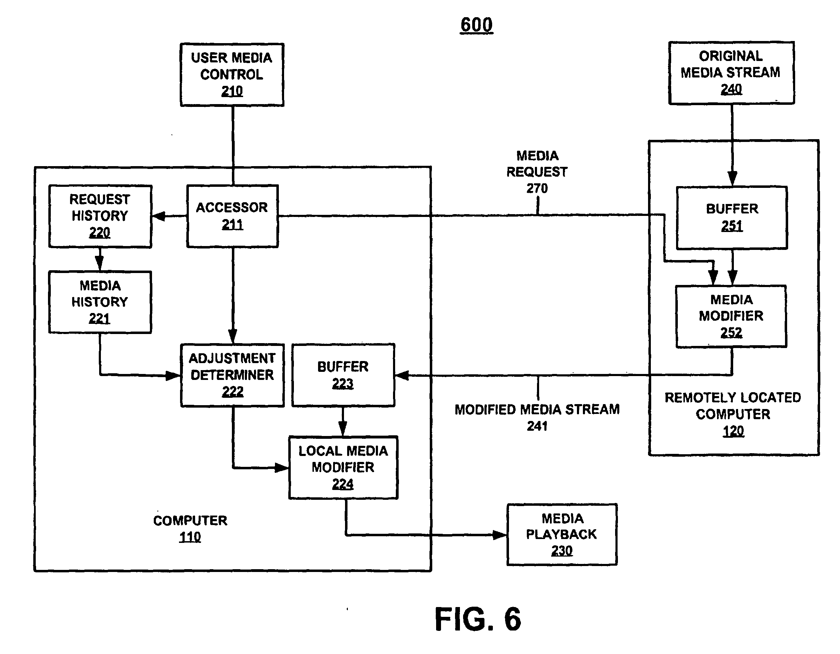

Figure 6 is a block diagram showing components of a system 600 for interactive control of media via a computer network in accordance with embodiments of the present invention. In the embodiment of Figure 6, system 600 is similar to that described above with reference to system 200 of Figure 2. In the embodiment of Figure 6, media request 270 includes a "future dated" instruction from computer 110 which tells media modifier 252 the timestamp of the first data packet of modified media stream 241. For example, media request 270 may be for an increase in the data rate which begins with the data packet having a timestamp of X (e.g., data packet 309 of Figure 3). In so doing, there is no need for computer 110 to receive information (e.g., via RTSP response 271 or sideband pathway 272) about the future data rate of data packets coming from media modifier 252. Instead, this information is conveyed via accessor 211 and request history 220 to media history 221 and adjustment determiner 222.

In embodiments of the present invention, the timestamp information sent from computer 110 is based upon a delay of the network delay in conveying messages via communication network 150 as well as service delays incurred by remotely located computer 120 in servicing media requests. In embodiments of the present invention, media modifier 252 can pause, or postpone performing the requested media modification until the designated timestamp is reached. This embodiment gives computer 110a predictable time history of target data rates, even without feedback from media modifier 252. This is advantageous in situations when, for example, remotely located computer 120 is running a legacy version of media modifier 252 which does not support sending information to media history 221 or local media modifier 224 (e.g., via RTSP response 271 or sideband pathway 272).

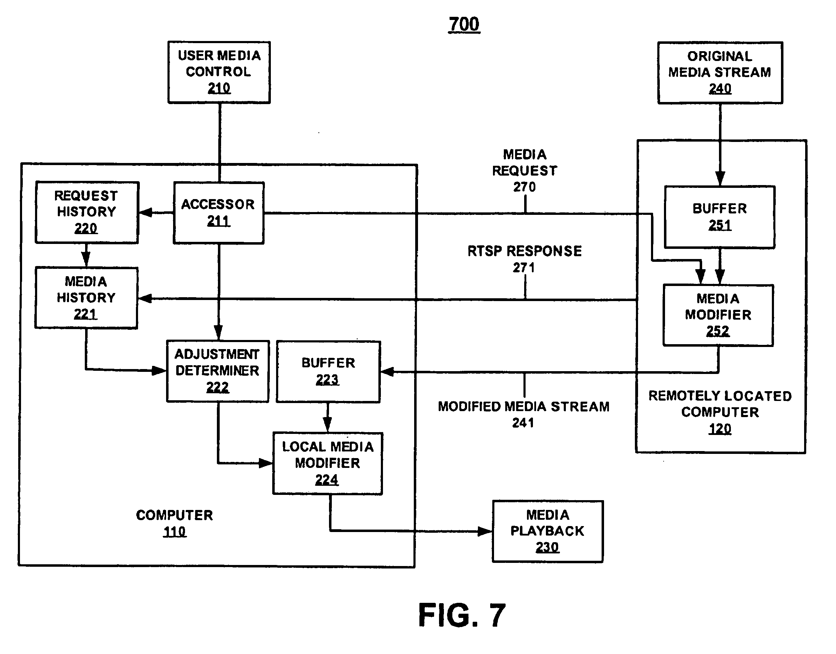

Figure 7 is a block diagram showing components of a system 700 for interactive control of media via a computer network in accordance with embodiments of the present invention. In the embodiment of Figure 7, system 700 is similar to that described above with reference to system 200 of Figure 2. In the embodiment of system 700, media modifier 252 does not accept future timestamp instructions from computer 110 as described above with reference to Figure 6. In embodiments of the present invention, when media request 270 is sent to media modifier 252, the time for RTSP response 271 to arrive is recorded in media history 221. As a result, an estimate of the network delay in conveying information via communication network 150 can be derived by the present invention. Additionally, the present invention can estimate the length of the service delay incurred by media modifier 252 and use that information to determine the duration for modifying the media stream locally until the requested media modification is delivered to computer 110. In embodiments of the present invention, the estimate of the service delay can be based upon known characteristics of media modifier 252 which, for example, may be stored in a database (not shown) which can be accessed by computer 110.

### GENERAL METHOD IN ACCORDANCE WITH EMBODIMENTS OF THE PRESENT INVENTION

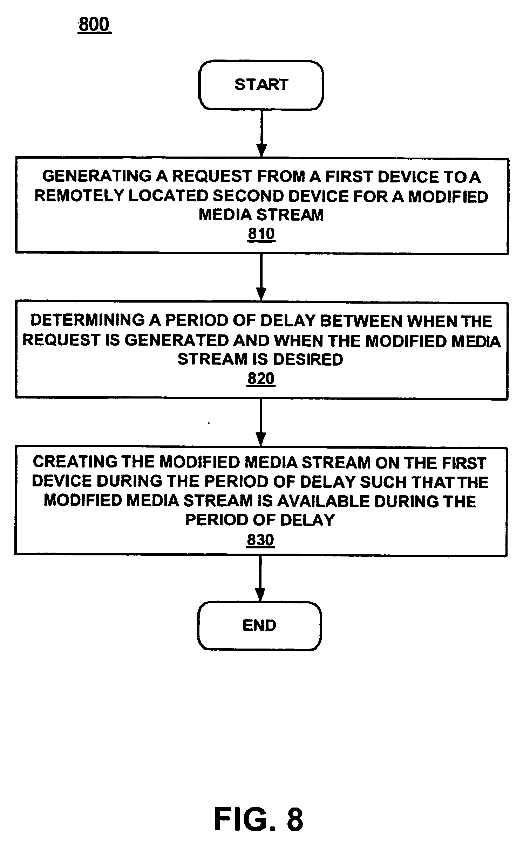

Figure 8 is a flowchart of a method for interactive control of media via a computer network in accordance with embodiments of the present invention. With reference to step 810 of Figure 8, a request for a first device is generated to a remotely located second device for a modified media stream. As described above, computer 110 generates a media request (e.g., media request 270) for a modified media stream.

With reference to step 820 of Figure 8, a period of delay is determined between when the request is generated and when the modified media stream is delivered. As described above with reference to Figure 2, adjustment determiner 222 determines the period of delay between when media request 270 is generated and when modified media stream 241 is delivered or anticipated.

With reference to step 830 of Figure 8, the modified media stream is created on the first device during the period of delay such that the modified media stream is available during said period of delay. As described above with reference to Figure 2, local media modifier 224 applies a Δ value to data packets in buffer 223 to create modified media stream 241 locally upon computer 110.

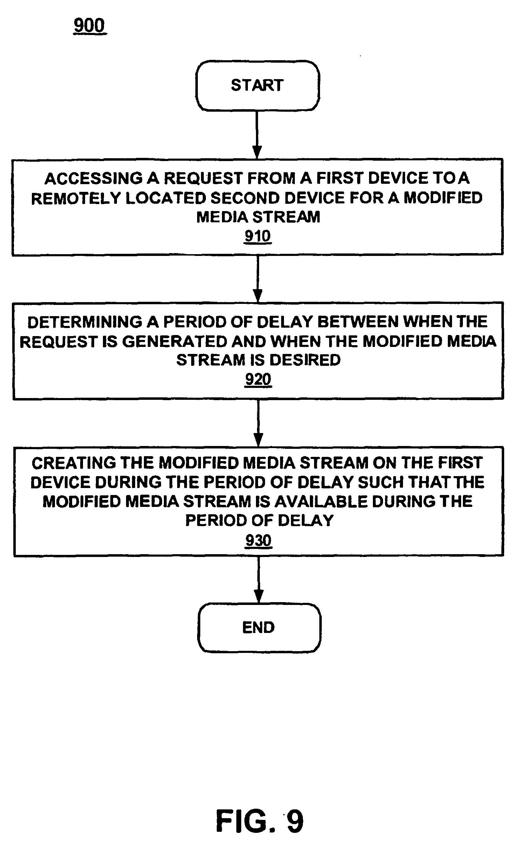

Figure 9 is a flowchart of a method for interactive control of media via a computer network in accordance with embodiments of the present invention. In step 910 of Figure 9, a request from a first device to a remotely located second device for a modified media stream is accessed. As described above with reference to Figure 2, in embodiments of the present invention, user media control 210 is utilized to generate requests for a modification of the media received from remotely located computer 120. In embodiments of the present invention, the request is accessed by accessor 211 and is then conveyed to media modifier 252 via media request 270.

In step 920 of Figure 9, a period of delay is determined between when the request is generated and when the modified media stream is delivered. As described above with reference to Figure 2, adjustment determiner 222 determines the period of delay between when media request 270 is generated and when modified media stream 241 is delivered or anticipated.

In step 930 of Figure 9, creating the modified media stream is created on the first device during the period of delay such that the modified media stream is available during the period of delay. As described above with reference to Figure 2, local media modifier 224 applies a Δ value to data packets in buffer 223 to create modified media stream 241 locally upon computer 110.

### NOTATION AND NOMECLATURE

Some portions of the detailed descriptions which follow are presented in terms of procedures, logic blocks, processing and other symbolic representations of operations on data bits within a computer memory. These descriptions and representations are the means used by those skilled in the data processing arts to most effectively convey the substance of their work to others skilled in the art. In the present application, a procedure, logic block, process, or the like, is conceived to be a self-consistent sequence of steps or instructions leading to a desired result. The steps are those requiring physical manipulations of physical quantities. Usually, although not necessarily, these quantities take the form of electrical or magnetic signal capable of being stored, transferred, combined, compared, and otherwise manipulated in a computer system.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing terms such as "generating," "determining," "creating," "identifying," "designating," "comparing," "applying," "accessing," "establishing," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

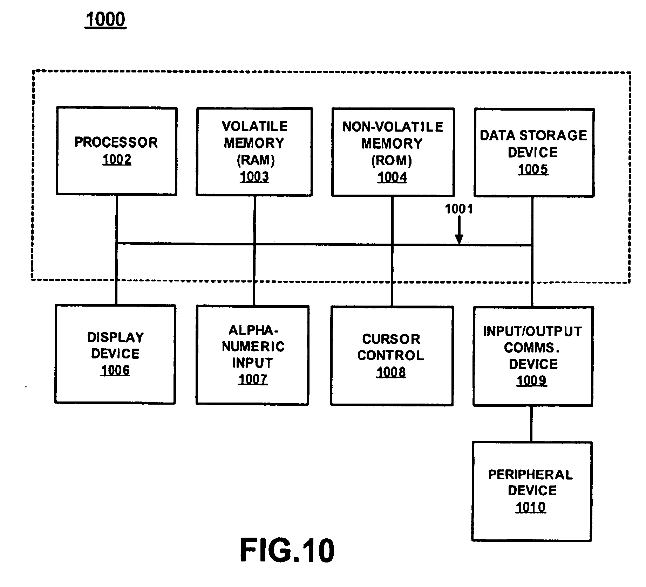

With reference to Figure 10, portions of the present invention are comprised of computer-readable and computer-executable instructions that reside, for example, in computer system 1000 which is used as a part of a general purpose computer network (not shown). It is appreciated that computer system 1000 of Figure 10 is exemplary only and that the present invention can operate within a number of different computer systems including general-purpose computer systems, embedded computer systems, laptop computer systems, hand-held computer systems, and stand-alone computer systems.

In the present embodiment, computer system 1000 includes an address/data bus 1001 for conveying digital information between the various components, a central processor unit (CPU) 1002 for processing the digital information and instructions, a volatile main memory 1003 comprised of volatile random access memory (RAM) for storing the digital information and instructions, and a non-volatile read only memory (ROM) 1004 for storing information and instructions of a more permanent nature. In addition, computer system 1000 may also include a data storage device 1005 (e.g., a magnetic, optical, floppy, or tape drive or the like) for storing vast amounts of data. It should be noted that the software program for performing a method for interactive control of media over a network of the present invention can be stored either in volatile memory 1003, data storage device 1005, or in an external storage device (not shown).

Devices which are optionally coupled to computer system 1000 include a display device 1006 for displaying information to a computer user, an alpha-numeric input device 1007 (e.g., a keyboard), and a cursor control device 1008 (e.g., mouse, trackball, light pen, etc.) for inputting data, selections, updates, etc. Computer system 1000 can also include a mechanism for emitting an audible signal (not shown).

Returning still to Figure 10, optional display device 1006 of Figure 10 may be a liquid crystal device, cathode ray tube, or other display device suitable for creating graphic images and alpha-numeric characters recognizable to a user. Optional cursor control device 1008 allows the computer user to dynamically signal the two dimensional movement of a visible symbol (cursor) on a display screen of display device 1006. Many implementations of cursor control device 1008 are known in the art including a trackball, mouse, touch pad, joystick, or special keys on alpha-numeric input 1007 capable of signaling movement of a given direction or manner displacement. Alternatively, it will be appreciated that a cursor can be directed an/or activated via input from alpha-numeric input 1007 using special keys and key sequence commands. Alternatively, the cursor may be directed and/or activated via input from a number of specially adapted cursor directing devices.

Furthermore, computer system 1000 can include an input/output (I/O) signal unit (e.g., interface) 1009 for interfacing with a peripheral device 1010 (e.g., a computer network, modem, mass storage device, etc.). Accordingly, computer system 1000 may be coupled in a network, such as a client/server environment, whereby a number of clients (e.g., personal computers, workstations, portable computers, minicomputers, terminals, etc.) are used to run processes for performing desired tasks. In particular, computer system 1000 can be coupled in a system for interactive control of media over a network.

The preferred embodiment of the present invention, a method and system for interactive control of media over a network, is thus described. While the present invention has been described in particular embodiments, it should be appreciated that the present invention should not be construed as limited by such embodiments, but rather construed according to the following claims.

## Claims

1. A method for interactive control of media via a computer network (100), said method comprising:
generating a request (270) from a first device (110) to a remotely located second device (120) for a modified media stream (241);
determining a period of delay between when said request (270) is generated and when said modified media stream (241) is delivered; and
creating said modified media stream (241) on said first device (110) during said period of delay such that said modified media (241) stream is available during said period of delay.

2. The method as recited in Claim 1 wherein said determining of said period of delay is based upon a reply (271) to said request (270), and wherein said reply (271) is generated by said remotely located second device (120).

3. The method as recited in Claim 2 wherein said reply (271) comprises a real time streaming protocol (RTSP) response.

4. The method as recited in Claim 2 wherein said reply (271) comprises identifying a first packet of data (309) of said modified media stream (241).

5. The method as recited in Claim 1 wherein said determining comprises designating to said remotely located second device (120) a first packet of data (309) of said modified media stream (241).

6. The method as recited in Claim 1 wherein said determining comprises said first device (110) generating an estimate of said period of delay.

7. The method as recited in Claim 6 wherein said estimate is based upon the period of delay between when a previous request (270) was generated by said first device (110) and when a previous modified media stream (241) was received by said first device (110).

8. The method as recited in Claim 1 further comprising:
comparing said modified media stream (241) with an existing media stream (240) to determine a modification value; and
applying said modification value to said existing media stream (240) to create said modified media stream (241).

9. The method as recited in Claim 8 further comprising:
accessing a media history (221) describing said existing media stream.

10. The method as recited in Claim 8 wherein said remotely located second device (120) converts a plurality of fixed size data packets (240) into a plurality of variably sized data packets (241) and comprising:
determining said modification value based upon the size of at least one of said plurality of variably sized data packets (241).

## Patentansprüche

1. Ein Verfahren zur interaktiven Steuerung von Medien über ein Computernetz (100), wobei das Verfahren folgende Schritte aufweist:
Erzeugen einer Anforderung (270) von einer ersten Vorrichtung (110) an eine entfernt gelegene zweite Vorrichtung (120) nach einem modifizierten Medienstrom (241);
Bestimmen einer Verzögerungsperiode zwischen einem Erzeugen der Anforderung (270) und einem Liefern des modifizierten Medienstroms (241); und
Erzeugen des modifizierten Medienstroms (241) auf der ersten Vorrichtung (110) während der Verzögerungsperiode, derart, dass der modifizierte Medienstrom (241) während der Verzögerungsperiode verfügbar ist.

2. Das Verfahren gemäß Anspruch 1, bei dem das Bestimmen der Verzögerungsperiode auf einer Antwort (271) auf die Anforderung (270) basiert, und bei dem die Antwort (271) durch die entfernt gelegene zweite Vorrichtung (120) erzeugt wird.

3. Das Verfahren gemäß Anspruch 2, bei dem die Antwort (271) ein Echtzeit-Strömungsprotokoll-Ansprechverhalten (RTSP-Ansprechverhalten) aufweist.

4. Das Verfahren gemäß Anspruch 2, bei dem die Antwort (271) ein Identifizieren eines ersten Datenpakets (309) des modifizierten Medienstroms (241) aufweist.

5. Das Verfahren gemäß Anspruch 1, bei dem das Bestimmen ein Benennen eines ersten Datenpakets (309) des modifizierten Medienstroms (241) an die entfernt angeordnete zweite Vorrichtung (120) aufweist.

6. Das Verfahren gemäß Anspruch 1, bei dem das Bestimmen aufweist, dass die erste Vorrichtung (110) einen Schätzwert der Verzögerungsperiode erzeugt.

7. Das Verfahren gemäß Anspruch 6, bei dem der Schätzwert auf der Verzögerungsperiode zwischen einem Erzeugen einer vorhergehenden Anforderung (270) durch die erste Vorrichtung (110) und einem Empfangen eines vorhergehenden modifizierten Medienstroms (241) durch die erste Vorrichtung (110) basiert.

8. Das Verfahren gemäß Anspruch 1, das ferner folgende Schritte aufweist:
Vergleichen des modifizierten Medienstroms (241) mit einem bestehenden Medienstrom (240), um einen Modifizierungswert zu bestimmen; und
Anwenden des Modifizierungswerts auf den bestehenden Medienstrom (240), um den modifizierten Medienstrom (241) zu erzeugen.

9. Das Verfahren gemäß Anspruch 8, das ferner folgenden Schritt aufweist:
Zugreifen auf eine Medienhistorie (221), die den bestehenden Medienstrom beschreibt.

10. Das Verfahren gemäß Anspruch 8, bei dem die entfernt gelegene zweite Vorrichtung (120) eine Mehrzahl von Datenpaketen (240) fester Größe in eine Mehrzahl von Datenpaketen (241) veränderlicher Größe umwandelt, und das folgenden Schritt aufweist:
Bestimmen des Modifizierungswerts basierend auf der Größe zumindest eines der Mehrzahl von Datenpaketen (241) veränderlicher Größe.

## Revendications

1. Procédé de contrôle interactif du contenu multimédia sur un réseau informatique (100), ledit procédé comprenant :
la génération d'une requête (270) à partir d'un premier dispositif (110) vers un second dispositif situé à distance (120) pour un flux multimédia modifié (241) ;
la détermination d'une période de retard entre le moment où ladite requête (270) est générée et le moment où ledit flux multimédia modifié (241) est délivré ; et
la création dudit flux multimédia (241) modifié sur ledit premier dispositif (110) pendant cette période de retard de sorte que ledit flux multimédia modifié (241) soit disponible pendant ladite période de retard.

2. Procédé selon la revendication 1, dans lequel ladite détermination de ladite période de retard est basée sur une réponse (271) à ladite requête (270), et dans lequel ladite réponse (271) est générée par ledit second dispositif situé à distance (120).

3. Procédé selon la revendication 2, dans lequel ladite réponse (271) comprend une réponse en temps réel du protocole RTSP.

4. Procédé selon la revendication 2, dans lequel ladite réponse (271) comprend l'identification d'un premier paquet de données (309) dudit flux multimédia modifié (241).

5. Procédé selon la revendication 1, dans lequel ladite détermination comprend la désignation au dit second dispositif situé à distance (120) d'un premier paquet de données (309) dudit flux multimédia modifié (241).

6. Procédé selon la revendication 1, dans lequel ladite détermination comprend la génération par ledit premier dispositif (110) d'une estimation de ladite période de retard.

7. Procédé selon la revendication 6, dans lequel ladite estimation est basée sur la période de retard entre le moment où une requête précédente (270) a été générée par ledit premier dispositif (110) et le moment où un flux multimédia modifié précédent (241) a été reçu par ledit premier dispositif (110).

8. Procédé selon la revendication 1, comprenant en outre :
la comparaison dudit flux multimédia modifié (241) avec un flux multimédia existant (240) pour déterminer une valeur de modification ; et
l'application de ladite valeur de modification au dit flux multimédia existant (240) pour créer ledit flux multimédia modifié (241).

9. Procédé selon la revendication 8, comprenant en outre :
l'accès à un historique des contenus multimédia (221) décrivant ledit flux multimédia existant.

10. Procédé selon la revendication 8, dans lequel ledit second dispositif situé à distance (120) convertit une pluralité de paquets de données de taille fixe (240) en une pluralité de paquets de données de tailles variables (241) et comprenant :
la détermination de ladite valeur de modification sur la base de la taille d'au moins l'un de ladite pluralité de paquets de données de tailles variables (241).
